# EUROPEAN PATENT SPECIFICATION

(11) **EP 2 833 733 B1**
(45) Date of publication and mention of the grant of the patent: **29.04.2020**
(21) Application number: 13712383.2
(22) Date of filing: 15.03.2013
(51) Int. Cl.: A23G 1/36, A23G 1/30, A23G 1/46

(54) **CHOCOLATE WITH MILK FAT FRACTIONS**
SCHOKOLADE MIT MILCHFETTFRAKTIONEN
CHOCOLAT AVEC DES FRACTIONS DE MATIÈRE GRASSE DU LAIT

(30) Priority: 03.04.2012 EP 12162924
(43) Date of publication of application: 11.02.2015
(73) Proprietor: FrieslandCampina Nederland B.V., 3818 LE Amersfoort (NL)
(72) Inventor: BOERBOOM, Fransiscus Johannes Gerardus, NL-3707 BH Zeist (NL); FISCHER, Sabine, NL-5731 TP Mierlo (NL)
(74) Representative: FrieslandCampina Nederland B.V.
(86) International application number: PCT/NL2013/050190
(87) International publication number: WO 2013/151424

(56) References cited:
- EP-A1- 2 030 510
- GB-A- 2 168 071
- LOHMAN M H ET AL: "EFFECT OF MILK FAT FRACTIONS ON FAT BLOOM IN DARK CHOCOLATE", JOURNAL OF THE AMERICAN OIL CHEMISTS' SOCIETY, SPRINGER, BERLIN, DE, vol. 71, no. 3, 1 March 1994 (1994-03-01), pages 267-276, XP000427179, ISSN: 0003-021X, DOI: 10.1007/BF02638052 cited in the application
- KAYLEGIAN K E: "Milkfat fractions in chocolate", MANUFACTURING CONFECTIONER, MANUFACTURING CONFECTIONER PUBLISHING COMPANY, US, vol. 77, no. 5, 1 January 1997 (1997-01-01), pages 79-84, XP008155850, ISSN: 0025-2573
- BYSTROM C E ET AL: "Evaluation of milk fat fractionation and modification techniques for creating cocoa butter replacers", LWT- FOOD SCIENCE AND TECHNOLOGY, ACADEMIC PRESS, UNITED KINGDOM, vol. 27, no. 2, 1 January 1994 (1994-01-01), pages 142-150, XP002478253, ISSN: 0023-6438, DOI: 10.1006/FSTL.1994.1030
- RANSOM-PAINTER K L ET AL: "Incorporation of milk fat and milk fat fractions into compound coatings made from palm kernel oil", JOURNAL OF DAIRY SCIENCE, AMERICAN DAIRY SCIENCE ASSOCIATION, US , vol. 80, no. 10 1 October 1997 (1997-10-01), pages 2237-2248, XP008155845, ISSN: 0022-0302 Retrieved from the Internet: URL:http://www.journalofdairyscience.org/i ssues [retrieved on 2012-09-11]
- HARTEL R W: "Applications of milk-fat fractions in confectionery products", JOURNAL OF THE AMERICAN OIL CHEMISTS' SOCIETY, SPRINGER, BERLIN, DE, vol. 73, no. 8, 1 August 1996 (1996-08-01) , pages 945-953, XP008155853, ISSN: 0003-021X, DOI: 10.1007/BF02523401
- ZIEGLEDER G ET AL: "Pralines (IV). Influence of milk fat on fat bloom. (translated)", SÜSSWARENTECHNIK, RHENANIA-FACHVERLAG, vol. 53, no. 3, 1 January 2008 (2008-01-01), pages 12-14, XP008155869, ISSN: 0173-7643
- TALBOT G: "Bloom and migration", CONFECTIONERY PRODUCTION, SPECIALISED PUBLICATIONS LTD., SURREY, GB, vol. 76, no. 3, 1 January 2010 (2010-01-01), pages 18-19, XP008155859, ISSN: 0010-5473
- NOBEL S ET AL: "Technofunctional barrier layers for preventing fat bloom in triple-shot pralines", FOOD RESEARCH INTERNATIONAL, ELSEVIER APPLIED SCIENCE, BARKING, GB, vol. 42, no. 1, 1 January 2009 (2009-01-01), pages 69-75, XP025769648, ISSN: 0963-9969, DOI: 10.1016/J.FOODRES.2008.08.011 [retrieved on 2008-08-31] cited in the application
- SONWAI S ET AL: "Controlling fat bloom formation in chocolate - Impact of milk fat on microstructure and fat phase crystallisation", FOOD CHEMISTRY, ELSEVIER LTD, NL, vol. 119, no. 1, 1 March 2010 (2010-03-01) , pages 286-297, XP026692050, ISSN: 0308-8146, DOI: 10.1016/J.FOODCHEM.2009.06.031 [retrieved on 2009-06-21] cited in the application
- J. BRICKNELL ET AL: "Relation of fat bloom in chocolate to polymorphic transition of cocoa butter", JOURNAL OF THE AMERICAN OIL CHEMISTS' SOCIETY, vol. 75, no. 11, 1 November 1998 (1998-11-01), pages 1609-1615, XP055013543, ISSN: 0003-021X, DOI: 10.1007/s11746-998-0101-0
- DIMICK P S: "FORMULATION OF MILK CHOCOLATE USING MILKFAT FRACTIONS", AUSTRALIAN JOURNAL OF DAIRY TECHNOLOGY, DAIRY INDUSTRY ASSOCIATION OF AUSTRALIA, MELBOURNE, AU, vol. 51, no. 2, 1 October 1996 (1996-10-01), pages 123-126, XP000633449, ISSN: 0004-9433
- BILJANA PAJIN ET AL: "Influence of high-melting milk fat fraction on quality and fat bloom stability of chocolate", EUROPEAN FOOD RESEARCH AND TECHNOLOGY ; ZEITSCHRIFT FÜR LEBENSMITTELUNTERSUCHUNG UND -FORSCHUNG A, SPRINGER, BERLIN, DE, vol. 220, no. 3-4, 1 March 2005 (2005-03-01), pages 389-394, XP019328059, ISSN: 1438-2385, DOI: 10.1007/S00217-004-1077-0

## Description

The present invention is directed to praline or filled chocolate comprising as coating a chocolate composition comprising milk fat fractions. The present invention makes use of milk fat fraction to reduce or prevent oil migration. Moreover, the present invention is based on the use of milk fat fraction to inhibit or delay bloom and/or migration bloom. Further, the invention relates to a method to produce such a praline or filled chocolate.

A bloomed chocolate is characterized by the loss of the initial gloss of the surface, giving rise to a more or less white aspect. Fat bloom can have different appearances, from a uniform dull grey to a marble aspect, as well as from small individual white points to large white spots on the chocolate. It can be due to many factors, including improper processing conditions, composition and temperature. One of the problems in characterizing bloom is its plurality of shape and also of formation conditions. Fat bloom has been studied since the beginning of the last century, with an increase in the knowledge of when and where it occurs. Numerous theories have been proposed to explain bloom formation, but so far none has covered all the multiplicity of bloom or taken into account all of the scientific data. Two main types of fat bloom can be discriminated: fat bloom on plain chocolate and fat bloom on filled chocolate. Fat bloom development on plain chocolate has already been studied intensively. Filled chocolates are often characterized by a high oil content center. These products are more prone to bloom than plain chocolate. This type of fat bloom is caused by migration of lipid fractions of the filling into the chocolate and is therefore referred to as migration bloom. Most fillings are mainly composed of vegetable fats differing from cocoa butter. Cocoa butter in chocolate contains mostly POP, POS and SOS (S: Stearin, O: Olein, P: Palmitine, L: Laurin). Hazelnut oil, an oil often present in fillings for chocolate, for example, contains mainly triolein (OOO) and other triacylglycerols based on linolenic acid (LOO, LLO, LLL). Liquid lipids or solid crystals in a liquid matrix can migrate to the surface. The uneven distribution leads to an intense migration of the lipid fractions of the filling into the chocolate and a weak diffusion of solid cocoa butter of the chocolate layer into the filling. The liquid components diffuse much faster than the solid ones, and this leads to a one-sided oil migration from the filling into the chocolate. Fat bloom development occurs by recrystallization of the migrated fats on the surface. The mono-unsaturated triacylglycerols of cocoa butter dissolve in the liquid fat and can also migrate to the surface, where they crystallize. It is known that production parameters and storage conditions play a role in migration speed. However, it is not clear yet how migration fat bloom can be successfully prevented or delayed. In the literature, the difference between polymorphic fat bloom on plain chocolate and migration fat bloom on filled chocolate is often overlooked, and results are often generalized. It seems that one of the major causes of the bloom on filled chocolates is the oil migration from the filling to the surface of the chocolate. Preventing or reducing the oil migration from filling to chocolate coating may therefore reduce or prevent the migration bloom on the chocolate. This problem has been identified, but without providing a solution, by Talbot (Confectionery Production, vol 76, no. 3, 1 January 2010, pages 18-19).

Milk fat has been used previously to inhibit bloom (Sonwai and Rousseau, Food Chemistry 119 (2010), 286-297). Milk fat fractions have also been used to inhibit bloom (Lohman and Hartel, JAOCS vol 71, no 3 (1994) 267-276 and Kaylegian, Manufacturing Confectioner, US, vol. 77, no. 5, 1 January 1997, pages 79-84). The use of milk fat or milk fat fraction was directed to inhibit bloom on plain chocolate. Nothing is said in these studies about migration bloom and all test were with plain chocolates that were not filled.

De Graef et al. (in Eur. J. Lipid Sci. Technology 107 (2005), 297-306) used butter oil in the chocolate to see the effect on migration bloom. Addition of 6% butter oil promoted fat bloom development while no significant difference was detected between chocolate with no added butter oil and 3% added butter oil. Nothing is disclosed on the effect of butter oil on oil migration.

It has been tried to prevent or reduce migration bloom by applying a techno-functional barrier in pralines (Nöbel et al., Food Research International 42 (2009) 69-75). The drawback of this is that an additional layer has to be applied and that it requires special equipment.

No satisfactory solution that prevents or reduces migration bloom in filled chocolates is known. Also the present inventors are not aware of any solution to prevent oil migration from the center to the outer chocolate surface other than the techno-functional barrier.

It is therefore an object of the invention to provide pralines or filled chocolates comprising a chocolate composition as coating, that show less oil migration. It is an object of the invention to provide pralines or filled chocolates comprising a chocolate composition as coating, that show less migration bloom.

The present invention provides a solution for at least one of the above mentioned objects. The inventors found that the presence of particular milk fat fractions in a chocolate composition reduce oil migration in pralines and filled chocolates.

Therefore the present invention provides praline or filled chocolate comprising a chocolate composition as coating, wherein the chocolate composition comprises a milk fat fraction wherein the milk fat fraction has a SFC25 of at least 36%, and/or a SFC30 of at least 25% and/or a SFC35 of at least 15%, preferably wherein the milk fat fraction has a SFC25 of at least 41.5%, and/or a SFC30 of at least 32.5% and/or a SFC35 of at least 21.5%, more preferably wherein the milk fat fraction has a SFC25 of at least 30%, and/or a SFC30 of at least 20% and/or a SFC35 of at least 10%.

Further the invention relates to a method to provide a praline or filled chocolate according to the invention wherein a filling is provided and a chocolate composition coating is provided, wherein the chocolate composition coating is prepared in a process comprising the steps of
a) preparing a chocolate mixture by mixing chocolate mass and sugar and/or other sweetening matter
b) optionally adding cocoa butter or other fat to make the fat percentage of the chocolate mixture from 5 to 50 wt% based on total weight of the chocolate composition
c) optionally adding other ingredients
d) refining the chocolate mixture
e) conching the chocolate mixture
f) tempering the chocolate mixture,
wherein the a milk fat fractions as defined in claims 1-10 may be added in step (a) and/or after refining step (d) or conching step (e).

It was found that oil migration that occurs in filled chocolates with high oil content such as pralines was greatly prevented or delayed when using a chocolate coating with the milk fat fractions defined above in accordance with the present invention.

For the context of the present application filled chocolates or pralines are chocolate pieces filled with a center. They are commonly known as "Belgian chocolates", "pralines" or "chocolate bonbons". They nearly always contain a hard chocolate shell with a (filling, that is usually softer, and sometimes even liquid. The filling can be butter, liquor, nuts, marzipan, fruit, or even a different kind of chocolate such as ganache. For the purpose of the present invention filled chocolates or pralines may be used interchangeably and indicate a harder chocolate shell with a filling that has a different texture than the coating. In a preferred embodiment the filling comprises oil. The oil is liquid at room temperature, such nut oil in praline filling but also soy oil, palm oil and sunflower oil. In a preferred embodiment the filling contains oil that is liquid at room temperature. Preferred oils in the filling are selected from the group consisting of nut oil, sunflower, soy oil, palm oil. In a preferred embodiment, the filling comprises sugar or other sweetening matter, preferably in an amount of 10-90%, more preferably from 20-80%, more preferably from 30-70%, more preferably from 40-60%. In a preferred embodiment the filling contains oil or fat, preferably in an amount of 10-80%, more preferably from 20-70%, more preferably from 30-60%, more preferably from 40-50%. In a preferred embodiment the filling comprises protein, preferable milk protein. In a preferred embodiment the filing comprises milk ingredients selected from the group of milk powder, milk, cream, butter, butter oil, skimmed milk powder, butter milk, butter milk powder, crème fraiche, sour cream. In a preferred embodiment the filling comprises 1-99% of a milk ingredient, more preferably 2-90%, more preferably 5-80%, more preferably 7-70%, more preferably from 10-60%, more preferably from 15-50%, more preferably from 20-45%, more preferably from 25-40%, and more preferably from 30-35%.

In a preferred embodiment the chocolate coating composition used in the praline or filled chocolate of the present invention comprises a milk fat fraction wherein the milk fat fraction has a SFC25 of less than 60%.

In a preferred embodiment the chocolate coating composition used in the praline or filled chocolate of the present invention comprises a milk fat fraction wherein the milk fat fraction has a SFC30 of less than 58%.

In a preferred embodiment the chocolate coating composition used in the praline or filled chocolate of the present invention comprises a milk fat fraction wherein the milk fat fraction has a SFC35 of less than 50%.

In a preferred embodiment the chocolate coating composition used in the praline or filled chocolate of the present invention comprises a milk fat fraction wherein the milk fat fraction has a SFC25 of at least 43%, preferably at least 45%, more preferably at least 50%, more preferably at least 55%, and most preferably at least 57%.

In a preferred embodiment the chocolate coating composition used in the praline or filled chocolate of the present invention comprises a milk fat fraction wherein the milk fat fraction has a SFC30 of at least 35%, preferably at least 37%, more preferably at least 40%, more preferably at least 45%, more preferably at least 50%, and most preferably at least 55%.

In a preferred embodiment the chocolate coating composition used in the praline or filled chocolate of the present invention comprises a milk fat fraction wherein the milk fat fraction has a SFC35 of at least 24%, preferably at least 27%, more preferably at least 30%, more preferably at least 35%, more preferably at least 40%, more preferably at least 45%, and most preferably at least 48%.

In a preferred embodiment the chocolate coating composition used in the praline or filled chocolate of the present invention comprises a milk fat fraction wherein the milk fat fraction has a SFC25 of from 43% to 57%, more preferably of from 45% to 55%, more preferably of from 47% to 53%, and most preferably of from 49% to 52%.

In a preferred embodiment the chocolate coating composition used in the praline or filled chocolate of the present invention comprises a milk fat fraction wherein the milk fat fraction has a SFC30 of from 35% to 56%, preferably of from 38% to 53%, more preferably of from 40% to 51%, more preferably from 42% to 49%, and most preferably from 44% to 47%.

In a preferred embodiment the chocolate coating composition used in the praline or filled chocolate of the present invention comprises a milk fat fraction wherein the milk fat fraction has a SFC35 of from 24% to 48%, preferably of from 27% to 45%, more preferably of from 30% to 42%, more preferably of from 32% to 39%, and most preferably of from 35% to 37.

In a preferred embodiment the chocolate coating composition used in the praline or filled chocolate of the present invention comprises a milk fat fraction wherein the milk fat fraction has a SFC40 of less than 25%. In a preferred embodiment the chocolate coating composition used in the praline or filled chocolate of the present invention comprises a milk fat fraction wherein the milk fat fraction has a SFC45 of less than 10%. In a preferred embodiment the chocolate coating composition used in the praline or filled chocolate of the present invention comprises a milk fat fraction wherein the milk fat fraction has a SFC45 of less than 5%. In a preferred embodiment the chocolate coating composition used in the praline or filled chocolate of the present invention comprises a milk fat fraction wherein the milk fat fraction is obtained by means other than solvent fractionation.

In a preferred embodiment the chocolate coating composition used in the praline or filled chocolate of the present invention comprises a milk fat fraction comprising up to 5 wt% of milk fat fractions, preferably 0.5-5 wt% milk fat fraction, more preferably 1-4 wt% milk fat fraction, more preferably 1.5-3.5 wt% milk fat fraction, most preferably 2-3 wt% milk fat fraction. On the basis of the fat phase, this chocolate coating composition comprises up to 18 wt% milk fat fraction, preferably from 1 to 18 wt%, more preferably from 3 to 15 wt% milk fat fraction, more preferably from 5-12 wt% milk fat fraction, and most preferably from 7 to 10 wt% milk fat fraction.

The chocolate coating composition used in the praline or filled chocolate according to the invention may comprise a fat phase in an amount of 5 to 50 wt%, more preferably in an amount of 10 to 40 wt%, more preferably in an amount of more preferably in an amount of 15 to 35 wt%, and more preferably 20-30 wt% based on total weight of the chocolate composition. Preferably the majority of the fat phase of this chocolate coating composition comprises cocoa butter. It was found that a relative small amount of up to 18 wt% of the fat phase, or up to 5 wt% of the total weight of the chocolate composition of milk fat fraction significantly delays or stops oil migration.

Another aspect of the present invention is the use of a milk fat fraction as defined in the present invention and embodiments thereof for preventing oil migration in praline or filled chocolate.

Another aspect of the present invention is a method to produce a praline or filled chocolate according to the present invention wherein a filling is provided and a chocolate coating composition is provided, wherein the chocolate composition coating is prepared in a process comprising the steps of
a) preparing a chocolate mixture by mixing chocolate mass and sugar
b) optionally adding cocoa butter or other fat to make the fat percentage of the chocolate mixture from 5 to 50 wt% based on total weight of the chocolate composition
c) optionally adding other ingredients
d) refining the chocolate mixture
e) conching the chocolate mixture
f) tempering the chocolate mixture,
wherein the milk fat fractions defined herein-above may be added in step (a) and/or after refining step (d) or conching step (e).

### Description of figures:

Fig. 1: Oil migration of pralines after storage at 20°C.
Fig. 2: Oil migration of pralines after storage at 23°C.
Fig. 3: Oil migration of pralines after storage at 20°C.
Fig. 4: Oil migration of pralines after storage at 23°C.

Under "milk fat", it is understood a fat mixture originating from milk, which is generally a mixture of triglycerides of a large variety of fatty acids. In the context of the invention the terms "oil" and "fat" are used interchangeably. Any suitable source of milk fat can be used, such as cream, butter or anhydrous milk fat. Under milk fat also fractions thereof are understood. Milk fat fractions can be obtained by fat fractionation techniques known to a person skilled in the art, for example, by fractionation based on crystallisation. However, other fat fractionation techniques such as supercritical CO₂ extraction, fractionation with solvent, short-path distillation and dry fractionation, vacuum filtration, centrifugation and the use of a membrane press are also suitable. Most preferred are fractionation techniques that do not involve the use of solvents, and particular do not involve organic solvents and or surface active agents. Preferred fractionation techniques may be selected from the group comprising, supercritical CO₂ extraction, short path distillation, dry fractionation, vacuum filtration, centrifugation and the use of a membrane press. Milk fat fractions in the present invention can be obtained by single or multi-step fractionation of milk fat. Preferably, anhydrous milk fat is used to obtain the milk fat fractions.

Fractionation by crystallisation is based on partial crystallisation of triglycerides with a high melting point caused by controlled slow cooling under mild stirring and then on their separation from the remaining liquid fats by filtration or centrifugation. The solid phase formed by the crystals is called stearin fraction and the remaining liquid phase is called olein fraction. The operation may be repeated in multiple ways on oleins and/or stearins obtained by new melting and cooling at different temperatures.

These successive operations performed on the fat fractions obtained in the previous steps are called multi-step fractionations. For example from a first olein fraction a second olein and stearin fraction are obtained, being denoted as olein-olein (OO) or olein-stearin (OS) respectively. These multi-step fractions may again be fractioned. For example the OS fraction is further fractionated into a olein fraction (OSO) and a stearin fraction (OSS). In general the order of fractionating is indicated, e.g. SO is the olein fraction of a stearin fraction. Typical main melting points of three olein fractions as measured by DSC are given in Table 1 below.

**Table 1**

| Olein fractions | Main melting peak | |
|---|---|---|
| | region, °C | typical value, °C |
| First olein (O) | 15-20 | 17 |
| Second olein (OO) | 10-15 | 11.51 |
| Third olein (OOO) | 5-10 | 7 |

Under the melting point of a milk fat fraction it is understood the main melting peak as determined by DSC.

Solid fat content (SFC) is a measure of the percentage of fat in crystalline (solid) phase to total fat (the remainder being in liquid phase). It is usually indicated by a temperature, e.g. SFC25 is the solid fat content at 25°C. It is followed by the percentage of crystaline/solid fat, thus SFC25= 41.5 means that at 25°C the fat consists of 41.5 wt% solid fat. The SFC may be measured by NMR by standardised methods:
- AOCS Cd 16b-93 revised in 2000; Direct Method
- AOCS Cd 16-81 revised in 2000, Indirect Method
- ISO 8292
- IUPAC 2.150

In the prior art, the solid fat amount of a fat may also be indicated by Solid Fat Index (SFI). The SFI of a fat is measured using a dilatometer that measures the expansion of a fat as it is heated; density measurements are taken at a series of standardized temperature check points. The resulting SFI/temperature curve is related to melting qualities and flavor. It should be noted that SFC and SFI do not results in the same solid fat measures and cannot be used interchangeably. The milk fat fractions of the present invention are indicated in solid fat content (SFC) and not solid fat index (SFI).

In a preferred embodiment the chocolate coating composition used in the praline or filled chocolate of the present invention comprises a milk fat fraction wherein the milk fat fraction has a SFC25 of from 43% to 57%, more preferably of from 45% to 55%, more preferably of from 47% to 53%, and most preferably of from 49% to 52%.

In a preferred embodiment the chocolate coating composition used in the praline or filled chocolate of the present invention comprises a milk fat fraction wherein the milk fat fraction has a SFC30 of from 35% to 56%, preferably of from 38% to 53%, more preferably of from 40% to 51%, more preferably from 42% to 49%, and most preferably from 44% to 47%.

In a preferred embodiment the chocolate coating composition used in the praline or filled chocolate of the present invention comprises a milk fat fraction wherein the milk fat fraction has a SFC35 of from 24% to 48%, preferably of from 27% to 45%, more preferably of from 30% to 42%, more preferably of from 32% to 39%, and most preferably of from 35% to 37.

In a preferred embodiment the chocolate coating composition used in the praline or filled chocolate of the present invention comprises a milk fat fraction wherein the milk fat fraction has a SFC40 of at least 2%, preferably at least 6%, preferably at least 8%, more preferably at least 10%, more preferably at least 12%, more preferably at least 20%, more preferably at least 25%, more preferably at least 35%.

In a preferred embodiment the chocolate coating composition used in the praline or filled chocolate of the present invention comprises a milk fat fraction wherein the milk fat fraction has a SFC40 of less than 40%, preferably less than 38%, preferably less than 35%, more preferably less than 30%, more preferably less than 25%, more preferably less than 20%, more preferably less than 18%, more preferably less than 15%, more preferably less than 12%, more preferably less than 10%, more preferably less than 8%, than 6%, more preferably less than 5%, more preferably less than 4%, more preferably less than 2%.

In a preferred embodiment the chocolate coating composition used in the praline or filled chocolate of the present invention comprises a milk fat fraction wherein the milk fat fraction has a SFC45 of less than 15%, preferably less than 12%, preferably less than 10%, more preferably less than 8%, more preferably less than 6%, more preferably less than 5%, more preferably less than 4%, more preferably less than 2%, more preferably less than 1%.

In a preferred embodiment the chocolate coating composition used in the praline or filled chocolate of the present invention comprises a milk fat fraction wherein the milk fat fraction has a SFC40 of from 8% to 40%, preferably from 10% to 35%, preferably fro 12% to 30%, more preferably from 15% to 27%, more preferably from 18% to 25% and most preferably from 20% to 23%.

In a preferred embodiment the chocolate coating composition used in the praline or filled chocolate of the present invention comprises a milk fat fraction wherein the milk fat fraction has a SFC45 of 0% to about 15%, preferably from 12% to 0.5%, preferably from 10% to 1%, more preferably from 8% to 2%, more preferably from 6% to 4%.

In another embodiment of the present invention the milk fat fraction is an stearin fraction. Preferably an stearin fraction obtained at a temperature of 15 to 20 °C. The stearin fraction may be fractionated further to provide a second stearin (SS) fraction or even the olein fraction of the stearin fraction (SO). The fractions of the stearin fraction may be fractionated further, e.g. to provide a third stearin fraction (SSS), the olein fraction of the second stearin fraction (SSO), the stearin fraction of the olein fraction of the first stearin fraction (SOS), or the olein fraction of the olein fraction of the first stearin fraction (SOO). It is to be understood that the further fractions from the stearin fraction are regarded as stearin fractions.

In a preferred embodiment the chocolate coating composition used in the praline or filled chocolate of the present invention and embodiments thereof comprises a milk fat fraction wherein the milk fat fraction is obtained by means other than solvent fractionation. Most preferred are fractionation techniques that do not involve the use of solvents, and particular do not involve organic solvents and or surface active agents. Preferred fractionation techniques may be selected from the group comprising, supercritical CO₂ extraction, short path distillation, dry fractionation, vacuum filtration, centrifugation and the use of a membrane press.

European regulations regarding chocolate (EU directive 2000/36/EC) mandate that in order to be labeled chocolate the fat content of the cocoa product comprises at least 95-100% cocoa butter and dairy fat. US regulation do not allow other vegetable fat than cocoa butter to be included in chocolate compositions. Compound coating is also known as compound chocolate and is a non-chocolate product replacement that may include vegetable fat and is often made from a combination of cocoa, vegetable fat, and sweeteners. Vegetable fat in compound coating may include, coconut oil, palm, palm kernel oil, canola, sunflower, safflour and/or fractions and/or esterifications thereof. It is to be understood that the chocolate composition of the present invention includes chocolates that are allowed to be labeled chocolate according the national regulations. However also chocolate compositions that are not allowed to be labeled chocolate are expressly comprised in the present invention. A chocolate coating composition used in accordance with the present invention is a composition that comprises cocoa solids.

In a preferred embodiment of the present invention, chocolate coating compositions are used comprising at least 2 wt% total dry cocoa solids up to 100%, more preferably in an amount of 15-90%, more preferably in an amount of 20-80% cocoa solids, more preferably in an amount of 25-70%, more preferably in an amount of 30-60%, more preferably in an amount of 30-60% cocoa solids, more preferably in an amount of 35-50% cocoa solids, and more preferably in an amount of 40-45% cocoa solids. The chocolate coating composition may further comprise sugar or other sweetening matter including artificial sweeteners, and/or protein. Chocolate coating compositions may comprise milk or milk derived ingredients, such as milk powder, preferably in an amount of 0-40 wt%. In a preferred embodiment coating chocolate compositions may comprise sugar or other sweetening matters and/or low calorie sugar replacers, preferably in an amount of 0-80 wt%, more preferably in an amount of 10-70%, more preferably in an amount of 20-60%, more preferably in an amount of 25-55%, more preferably in an amount of 30-50%, more preferably in an amount of 35-45%. In a preferred embodiment, the chocolate coating composition, comprises at least 43 wt% total dry cocoa solids, and preferably at least 26 wt% cocoa butter. In another preferred embodiment the chocolate coating composition comprises at least 30 wt % total dry cocoa solids and preferably comprises at least 18 wt% dry milk solids, preferably including not less than 4,5 wt% milk fat. In another preferred embodiment, the chocolate coating composition comprises preferably at least 16 wt % of dry non-fat cocoa solids.

White chocolate preferably comprises, cocoa butter, milk or milk products and sugars and preferably comprises at least 20 wt% cocoa butter, preferably at least 14 wt% dry milk solids and preferably at least 3,5 % is milk fat and/or milk fat fractions.

In a preferred embodiment the chocolate coating composition used in the praline or filled chocolate of the present invention comprises up to 5 wt% of milk fat fractions, preferably 0.5-5wt% milk fat fraction, more preferably 1-4 wt% milk fat fraction, more preferably 1.5-3.5wt% milk fat fraction, most preferably 2-3 wt% milk fat fraction based on total weight of the chocolate composition. On the basis of the fat phase, the chocolate coating composition comprises up to 18 wt% milk fat fraction, preferably from 1 to 18 wt%, more preferably from 3 to 15 wt% milk fat fraction, more preferably from 5 to 12 wt% milk fat fraction, and most preferably from 7 to 10 wt% milk fat fraction. The chocolate coating composition used according to the invention may comprise a fat phase in an amount of 5 to 50 wt%, more preferably in an amount of 10 to 40 wt%, more preferably in an amount of 15 to 35 wt% and most preferably in an amount of 20 to 30 wt%, based on total weight of the chocolate composition. Preferably the majority of the fat phase of the chocolate coating composition used in the praline or filled chocolate of the present invention comprises cocoa butter. It was found that a relative small amount of up to 18 wt% of the fat phase, or up to 5 wt% of the total weight of the chocolate coating composition of milk fat fraction significantly delays or stops oil migration.

In another preferred embodiment the chocolate coating composition used in the praline or filled chocolate according to the invention comprises cocoa butter preferably in an amount of 5-40 wt%, 10 to 35 wt%, most preferably in an amount of 20 to 35 wt% on total weight of the chocolate coating composition. Preferably the fat phase of the chocolate coating composition used in the praline or filled chocolate of the present invention comprises mostly cocoa butter.

In a preferred embodiment the fat phase of the chocolate coating composition used in the praline or filled chocolate of the present invention contains only milk fat fraction and cocoa butter. Preferably, the amount of cocoa butter in the fat phase is at least 20 wt%, more preferably at least 50 wt%, more preferably at least 60 wt%, more preferably at least 70 wt%, more preferably at least 80 wt%, more preferably at least 82 wt%, more preferably at least 86 wt%, more preferably at least 90 wt%, more preferably at least 93 wt%, more preferably at least 95 wt% more preferably at least 97 wt% and most preferably at least 99 wt% on fat phase.

However in an another embodiment the chocolate coating composition used in the praline or filled chocolate of the invention the fat phase may comprise other fats than milk fat fraction and cocoa butter, such as cocoa butter equivalent, cocoa butter alternatives, cocoa butter replacers, cocoa butter improver, and cocoa butter substitutes. Suitable fats for the fat phase of the chocolate coating composition used in the praline or filled chocolate of the present invention are shea fat, illipe fat, sal fat, kokum gurgi fat, mango kernel fat, and fractions thereof, fractionated vegetable fats, palm mid fractions, fractionated lauric oils, palm kernel fractions, hydrogenated vegetable fats, interesterified vegetable fats, interesterified, hydrogenated, solid fraction of tea seed oil. Suitable amounts of these other fats are 0.5 wt%, 1 wt%, 2 wt%, 3 wt%, 4 wt%, 5 wt%, 7 wt%, 8 wt%, 9 wt%, 11 wt%, 12 wt%, 13 wt%, 16 wt%, 20 wt%, 22 wt%, 23 wt%, 26 wt%, 30 wt%, and/or 37 wt% based on fat phase. Preferably the amount of other fats or oils is less than 10 wt%, more preferably less than 5 wt%, more preferably less than 3 wt% and most preferably less than 2 wt% on total weight of chocolate composition.

In a preferred embodiment of the invention and/or embodiments thereof, the chocolate coating composition is not a compound composition. In another preferred embodiment of the invention and/or embodiments thereof, the fat phase of the chocolate coating composition does not comprise palm kernel oil. In a preferred embodiment of the invention and/or embodiments thereof, the amount of palm kernel oil is less than 30 wt% on total weight of chocolate composition, preferably less than 25 wt%, preferably less than 20 wt%, more preferably less than 15 wt%, more preferably less than 10 wt%, more preferably less than 8 wt%, more preferably less than 5 wt%, more preferably less than 4 wt%, more preferably less than 2 wt%, and more preferably less than 1 wt%.

Preferably at least 10 wt% of sweetening matter is present in the chocolate composition. Sweetening matter may be sugar, such as simple sugars (monosaccharides) such as glucose, fructose, and galactose, or disaccharides such as sucrose, maltose and lactose. Sweetening matter may also include sugar substitutes such as stevia, steviol glycosides, aspartame, sucralose, acesulfame potassium, aspartame-acesulfame salt, saccharin, sorbitol, xylitol, cyclamate, brazzein, curculin, erythritol, glycyrrhizin, glycerol, hydrogenated starch hydrolysates, isomalt, lactitol, mogroside, mabinlin, maltitol, mannitol, miraculin, monatin, monelin, osladin, pentadin, tagatose, thaumatin, alitame, dulcin, glucin, neohesperidin dihydrochalcone, neotame, advantame, P-4000 and/or combinations thereof. Also envisioned are combinations of sugar and sugar substitutes. In a preferred embodiment, at least 12 wt% sweetening matter is present in the chocolate composition, more preferably at least 15 wt%, more preferably at least 20 wt%, more preferably at least 22 wt%, more preferably at least 25 wt%, more preferably at least 30 wt%, more preferably at least 35 wt%, more preferably at least 40 wt%, more preferably at least 45 wt%, more preferably at least 50 wt%, more preferably ate least 55 wt%, more preferably at least 60 wt%. In a preferred embodiment of the present invention and embodiments thereof, the sweetening matter is sugar, and/or a mix of sugar with sugar substitutes.

It is to be understood that some sweetening materials have a high sweetness index, while others have a lower sweetness index. A skilled person will understand that a sweetening material with high sweetness index may be used in a lower amount than sweetening materials with lower sweetness index.

In another preferred embodiment, the chocolate coating composition used in the praline or filled chocolate according to the invention comprises sugar and/or sweetening matter preferably in an amount of 20 to 90 wt%, more preferably in an amount of 30 to 80 wt%, more preferably in an amount of 35 to 70 wt% and more preferably in an amount of 40 to 60 wt% and more preferably in an amount of 45-55 wt% based on total weight of the chocolate coating.

In another preferred embodiment the chocolate coating composition used in the praline or filled chocolate according to the invention comprises milk or milk powder, preferably in an amount of 0 to 50 wt%, preferably 1 to 40 wt%, more preferably 2 to 35 wt%, more preferably 3-30 wt%, more preferably 5-25 wt% and more preferably 10-22 wt%, and more preferably from 15-20 wt%.

In another preferred embodiment the chocolate coating composition used in the praline or filled chocolate according to the invention comprises dry fat free cocoa solids preferably in an amount of 2.5 to 45 wt%, more preferably in an amount of 5 to 40 wt%, more preferably in an amount of 10-35 wt%, more preferably in an amount of 15 to 30 wt%, more preferably in an amount of 20 to 25 wt%. Dry fat free cocoa solids are the solid fraction of chocolate mass or liquor which remains when the cocoa butter has been removed.

In another preferred embodiment the chocolate coating composition according to the invention and/or embodiments thereof comprises other ingredients selected from the group comprising, emulsifiers such as lecithin from soy, sunflower, or rapeseed, AMP, mono- and diglycerides and their lactic acid esters and citric acid ester (citrem), PGPR, sucrose esters of fatty acids, STS, aroma's or flavors such as, natural vanilla, vanillin or herbs, other ingredients such as nuts, raisins, fruit. Filled chocolates and pralines usually consist of a harder outer chocolate coating and a filling that has a different texture than the outer coating. The chocolate coating composition used according to the invention may be used as this harder outer chocolate coating.

In accordance with the present invention a milk fat fraction as defined above is used for preventing oil migration in praline or filled chocolate.

The filling may be softer than the outer shell and may even be liquid. The filling can be butter, cream, liquor, nuts, marzipan, fruit, or even a different kind of chocolate such as ganache, and mixtures thereof. In a preferred embodiment the filling contains oil that is liquid at room temperature. Preferred oils in the filling are selected from the group consisting of nut oil, sunflower, soy oil, palm oil. In a preferred embodiment, the filling comprises sugar, preferably in an amount of 10-90%, more preferably from 20-80%, more preferably from 30-70%, more preferably from 40-60%. In a preferred embodiment the filling contains oil or fat, preferably in an amount of 10-80%, more preferably from 20-70%, more preferably from 30-60%, more preferably from 40-50%. In a preferred embodiment the filling comprises protein, preferable milk protein. In a preferred embodiment the filing comprises milk ingredients selected from the group of milk powder, milk, cream, butter, butter oil, skimmed milk powder, butter milk, butter milk powder, crème fraiche, sour cream. In a preferred embodiment the filling comprises 1-99% of a milk ingredient, more preferably 2-90%, more preferably 5-80%, more preferably 7-70%, more preferably from 10-60%, more preferably from 15-50%, more preferably from 20-45%, more preferably from 25-40%, and more preferably from 30-35%.

Another aspect of the present invention is the use of the chocolate coating composition as layer in filled chocolates. It was found that the milk fat fractions work very well against oil migration from the core to the chocolate coating. The composition of the present will therefore be very suitable for either a coating of an oil containing filling, or as a layer between an oil containing filling and chocolate coating.

As said above, the invention also relates to a method producing the praline or filled chocolate according to the invention.

The first step in the method of the present invention is mixing a milk fat fraction with chocolate mass and sugar. The milk fat fraction is as defined above.

In a preferred embodiment of the method of the present invention and embodiment thereof a milk fat fraction is mixed with chocolate mass and sugar wherein the milk fat fraction has a SFC25 of at least 41.5%. In a preferred embodiment the method of the present invention and embodiments thereof mixes a milk fat fraction wherein the milk fat fraction has a SFC30 of at least 32.5%. In another preferred embodiment the method of the present invention and embodiments thereof mixes a milk fat fraction wherein the milk fat fraction has a SFC35 of at least 21.5%.

In a preferred embodiment of the method of the present invention and embodiment thereof a milk fat fraction is mixed with chocolate mass and sugar wherein the milk fat fraction has a SFC25 of at least 30%. In a preferred embodiment the method of the present invention and embodiments thereof mixes a milk fat fraction wherein the milk fat fraction has a SFC30 of at least 20%. In another preferred embodiment the method of the present invention and embodiments thereof mixes a milk fat fraction wherein the milk fat fraction has a SFC35 of at least 10%.

In a preferred embodiment of the method of the present invention and embodiment thereof a milk fat fraction is mixed with chocolate mass and sugar wherein the milk fat fraction has a SFC25 of at least 36%. In a preferred embodiment the method of the present invention and embodiments thereof mixes a milk fat fraction wherein the milk fat fraction has a SFC30 of at least 25%. In another preferred embodiment the method of the present invention and embodiments thereof mixes a milk fat fraction wherein the milk fat fraction has a SFC35 of at least 15%.

The method of the present invention and embodiments thereof are very suitable to produce a chocolate composition to be used for chocolate coating such as for e.g. filled chocolates or pralines. It was found that oil migration that occurs in filled chocolates with high oil content such as pralines was greatly prevented or delayed in the chocolate coating when using the milk fat fraction of the present invention.

In another preferred embodiment the method of the present invention and embodiments thereof mixes a milk fat fraction wherein the milk fat fraction has a SFC25 of less than 60%.

In another preferred embodiment the method of the present invention and embodiments thereof mixes a milk fat fraction wherein the milk fat fraction has a SFC30 of less than 58%.

In another preferred embodiment the method of the present invention and embodiments thereof mixes a milk fat fraction wherein the milk fat fraction has a SFC35 of less than 50%.

In another preferred embodiment the method of the present invention and embodiments thereof mixes a milk fat fraction wherein the milk fat fraction has a SCF 25 of at least 43%, preferably at least 45%, more preferably at least 50%, more preferably at least 55%, and most preferably at least 57%.

In another preferred embodiment the method of the present invention and embodiments thereof mixes a milk fat fraction wherein the milk fat fraction has a SCF 30 of at least 35%, preferably at least 37%, more preferably at least 40%, more preferably at least 45%, more preferably at least 50%, and most preferably at least 55%.

In another preferred embodiment the method of the present invention and embodiments thereof mixes a milk fat fraction wherein the milk fat fraction has a SCF 35 of at least 24%, preferably at least 27%, more preferably at least 30%, more preferably at least 35%, more preferably at least 40%, more preferably at least 45%, and most preferably at least 48%.

In another preferred embodiment the method of the present invention and embodiments thereof mixes a milk fat fraction wherein the milk fat fraction has a SFC25 of from 43% to 57%, more preferably of from 45% to 55%, more preferably of from 47% to 53%, and most preferably of from 49% to 52%.

In another preferred embodiment the method of the present invention and embodiments thereof mixes a milk fat fraction wherein the milk fat fraction has a SFC30 of from 35% to 56%, preferably of from 38% to 53%, more preferably of from 40% to 51%, more preferably from 42% to 49%, and most preferably from 44% to 47%.

In another preferred embodiment the method of the present invention and embodiments thereof mixes a milk fat fraction wherein the milk fat fraction has a SFC35 of from 24% to 48%, preferably of from 27% to 45%, more preferably of from 30% to 42%, more preferably of from 32% to 39%, and most preferably of from 35% to 37.

In another preferred embodiment the method of the present invention and embodiments thereof comprises a milk fat fraction wherein the milk fat fraction has a SFC40 of at least 8%, preferably at least 10%, preferably at least 12%, more preferably at least 15%, more preferably at least 20%, more preferably at least 25%, more preferably at least 30%, more preferably at least 35%.

In another preferred embodiment the method of the present invention and embodiments thereof comprises a milk fat fraction wherein the milk fat fraction has a SFC40 of less than 40%, preferably less than 38%, preferably less than 35%, more preferably less than 30%, more preferably less than 25%, more preferably less than 20%, more preferably less than 18%, more preferably less than 15%, more preferably less than 12%, more preferably less than 10%, more preferably less than 8%, than 6%, more preferably less than 5%, more preferably less than 4%, more preferably less than 2%.

In a preferred embodiment the method of the present invention and embodiments thereof comprises a milk fat fraction wherein the milk fat fraction has a SFC40 of at least 2%, preferably at least 4%, preferably at least 5%, more preferably at least 6%, preferably at least 8%, preferably at least 10%, preferably at least 12%, more preferably at least 15%, more preferably at least 20%, more preferably at least 25%, more preferably at least 30%, more preferably at least 35%.

In another preferred embodiment the method of the present invention and embodiments thereof comprises a milk fat fraction wherein the milk fat fraction has a SFC45 of less than 15%, preferably less than 12%, preferably less than 10%, more preferably less than 8%, more preferably less than 6%, more preferably less than 5%, more preferably less than 4%, more preferably less than 2%, more preferably less than 1%.

In another preferred embodiment the method of the present invention and embodiments thereof comprises a milk fat fraction wherein the milk fat fraction has a SFC40 of from 2% to 40%, preferably from 5% to 35%, preferably from 8% to 30%, more preferably from 10% to 27%, more preferably from 12% to 25% and more preferably from 15% to 23%, and more preferably from 17% to 20%.

In another preferred embodiment the method of the present invention and embodiments thereof comprises a milk fat fraction wherein the milk fat fraction has a SFC45 of 0% to 15%, preferably from 12% to 0.5%, preferably from 10% to 1%, more preferably from 8% to 2%, more preferably from 6% to 4%.

In another preferred embodiment the method of the present invention and embodiments thereof mixes a milk fat fraction wherein the milk fat fraction is obtained by means other than solvent fractionation.

In one step of the method of the invention and/or embodiments thereof sugar is mixed with a milk fat fraction and chocolate mass. Chocolate mass is made from fermented cocoa beans that are then dried, cleaned, and roasted after the fermentation. After the shell is removed from roasted fermented cocoa beans the resulting cacao nibs are then ground to cocoa mass. For the purpose of the present invention, chocolate mass also comprises chocolate liquor, which is liquefied chocolate mass.

The method of the invention and/or embodiments thereof comprises the step of mixing sugar with a chocolate mass. In a preferred embodiment sugar in an amount of 30 to 80 wt%, more preferably in an amount of 35 to 70 wt%, more preferably in an amount of 40 to 60 wt% and most preferably in an amount of 45 to 55 wt% is mixed with the chocolate mass. The amount of sugar is on total weight of the chocolate composition.

In a preferred embodiment of the method of the present invention and embodiments thereof produces a chocolate coating composition, up to 5 wt% of milk fat fractions, preferably 0.5-5 wt% milk fat fraction, more preferably 1-4 wt% milk fat fraction, more preferably 1.5-3.5 wt%, and most preferably 2-3 wt% milk fat fraction based on total weight of the chocolate may be mixed with a chocolate mass and sugar. On the basis of the fat phase of the final chocolate composition, up to 18 wt% milk fat fraction, preferably from 1 to 18 wt%, more preferably from 3 to 15 wt% milk fat fraction, more preferably from 5 to 12 wt% milk fat fraction, and most preferably from 7 to 10 wt% milk fat fraction may be mixed with the chocolate mass and sugar.

In another preferred embodiment of the method of the invention and/or embodiments thereof, a chocolate coating composition is produced having a fat phase in an amount of 5 to 50 wt%, more preferably in an amount of 10 to 40 wt%, most preferably in an amount of 15 to 35 wt%, and more preferably in an amount of 20 to 30 wt% based on total weight of the chocolate composition. Preferably the majority of the fat phase of the method of the present invention and embodiments thereof consists of cocoa butter. It was found that a relative small amount of milk fat fraction of up to 18 wt% of the fat phase, or up to 5 wt% of the total weight of the chocolate composition significantly delays or stops fat bloom and especially migration bloom.

Yet another embodiment of the invention is directed to a method to produce a chocolate coating composition comprising cocoa butter preferably in an amount of 5-40 wt%, 10 to 35 wt%, most preferably in an amount of 15 to 30 wt% on total weight of the chocolate composition. Preferably the method of the present invention and embodiments thereof produces a chocolate composition wherein the fat phase comprises mostly cocoa butter. In a preferred embodiment the method of the present invention and embodiments thereof produces a chocolate coating composition containing only milk fat fraction and cocoa butter in the fat phase. Preferably, the amount of cocoa butter in the fat phase is at least 20 wt%, more preferably at least 50 wt%, more preferably at least 60 wt%, more preferably at least 70 wt%, more preferably at least 80 wt%, more preferably at least 82 wt%, more preferably at least 86 wt%, more preferably at least 90 wt%, more preferably at least 93 wt%, more preferably at least 95 wt% more preferably at least 97 wt% and most preferably at least 99 wt% on fat phase. However in an another embodiment of the method of the present invention and embodiments thereof, the fat phase may comprise other fats than milk fat fraction and cocoa butter, such as cocoa butter equivalent, cocoa butter alternatives, cocoa butter replacers, cocoa butter improver. Suitable other fats for the fat phase of the method of the present invention are shea fat, illipe fat, sal fat, kokum gurgi fat, mango kernel fat, and fractions thereof, fractionated vegetable fats, palm mid fractions, fractionated lauric oils, palm kernel fractions, hydrogenated vegetable fats, interesterified vegetable fats, interesterified, hydrogenated, solid fraction of tea seed oil. Suitable amounts of these other fats are 0.5 wt%, 1 wt%, 2 wt%, 3 wt%, 4 wt%, 5 wt%, 7 wt%, 8 wt%, 9 wt%, 11 wt%, 12 wt%, 13 wt%, 16 wt%, 20 wt%, 22 wt%, 23 wt%, 26 wt%, 30 wt%, and/or 37 wt% based on fat phase. Preferably the amount of other fats or oils is less than 10 wt%, more preferably less than 5 wt%, more preferably less than 3 wt% and most preferably less than 2 wt% on total weight of chocolate composition.

In a preferred embodiment of the invention and/or embodiments thereof, the chocolate coating composition is not a compound composition. In another preferred embodiment of the invention and/or embodiments thereof, the fat phase of the chocolate coating composition does not comprise palm kernel oil. In a preferred embodiment of the invention and/or embodiments thereof, the amount of palm kernel oil is less than 30 wt% on total weight of chocolate composition, preferably less than 25 wt%, preferably less than 20 wt%, more preferably less than 15 wt%, more preferably less than 10 wt%, more preferably less than 8 wt%, more preferably less than 5 wt%, more preferably less than 4 wt%, more preferably less than 2 wt%, and more preferably less than 1 wt%.

In another preferred embodiment of the method of the present invention and embodiments thereof, milk or milk powder may be added, preferably in an amount of 0 to 50 wt%, preferably 1 to 40 wt%, more preferably 2 to 35 wt%, more preferably 3-39 wt%, more preferably 5-25 wt% and more preferably 10-22 wt%, and more preferably 15-20 wt% based on total weight of the chocolate coating composition.

In another preferred embodiment the chocolate coating composition according to the invention and/or embodiments thereof comprises dry fat free cocoa solids preferably in an amount of 2.5 to 45 wt%, more preferably in an amount of 5 to 40 wt%, more preferably in an amount of 10-35 wt%, more preferably in an amount of 15 to 32 wt%, more preferably in an amount of 20 to 30 wt%, more preferably in an amount of 25-27 wt%. Dry fat free cocoa solids are the solid fraction of chocolate mass or liquor which remains when the cocoa butter has been removed.

In another preferred embodiment of the method of the present invention, other ingredients selected from the group comprising emulsifiers such as lecithin from soy, sunflower, or rapeseed, AMP, mono- and diglycerides and their lactic acid esters and citric acid ester (citrem), PGPR, STS, sucrose esters of fatty acids, aromas or flavors such as vanilla, vanillin, herbs, and/or other ingredients such as nuts, raisins, and/or fruit may be added.

Refining reduces the size of the chocolate solids and sugar crystals. Refining the chocolate can be done with a grinder
Conching is the process of distributing the fat phase evenly within the chocolate. It is an important process that promotes flavor development. Conching may last up to 78 hours for high quality chocolate with a mild, rich taste. Lower quality chocolate may be conched for as little as 6 hours. Conching is important to the final texture and flavor of chocolate. During conching the chocolate mixture is mixed, agitated and aerated. Conching and refining of the chocolate may be done simultaneously by a grinder.

Tempering is the process of controlled crystallization of the fat phase. Cocoa butter can crystalize into six different polymorphic forms. The primary purpose of tempering is to assure that only the best polymorph, type V, is formed so that the chocolate is glossy, firm, has a good snap, and melts near body temperature. The other polymorphs of cocoa butter render the chocolate, soft, crumbly and/or too easy to melt. Generally, the chocolate is first heated to around 45 °C (113 °F) to melt all six forms of crystals. Next, the chocolate is cooled to about 27 °C (81 °F), which will allow crystal types IV and V to form. At this temperature, the chocolate is agitated to create many small crystal "seeds" which will serve as nuclei to create small crystals in the chocolate. The chocolate is then heated to about 31 °C (88 °F) to eliminate any type IV crystals, leaving just type V. After this point, any excessive heating of the chocolate will destroy the temper and this process will have to be repeated. However, there are other methods of chocolate tempering used. The most common variant is introducing already tempered, solid "seed" chocolate. The temper of chocolate can be measured with a chocolate temper meter to ensure accuracy and consistency. Two classic ways of manually tempering chocolate are:
- Working the molten chocolate on a heat-absorbing surface, such as a stone slab, until thickening indicates the presence of sufficient crystal "seeds"; the chocolate is then gently warmed to working temperature.
- Stirring solid chocolate into molten chocolate to "inoculate" the liquid chocolate with crystals (this method uses the already formed crystals of the solid chocolate to "seed" the molten chocolate).

Chocolate tempering machines (or temperers) with computer controls can be used for producing consistently tempered chocolate, particularly for large volume applications.

A skilled person will be able to adjust the refining, conching and tempering parameters according the chocolate composition and its intended use.

### Examples

### Measuring Solid fat content:

Determining the solid fat content of a fat sample at a certain temperature using pulse-NMR. Required Equipment: pulse-NMR spectrometer (Bruker Mini Spec mq 20), waterbath (0 °C, 10, 15, 18, 20, 25 and 30 °C (all ± 0.1 °C) (Temperatures can be adjusted dependent on the measurement range), calibrated thermometer (in 0.1 °C), Aluminum blocks, glass tubes, d = 10 mm Method

### Pre-treatment sample

Samples are melted in a water bath at a temperature of 85°C. When the samples are clear they are filtered in a folding filter with anhydrous sodium sulphate. After filtration the sample is reheated to 80°C.

Bruker Mini Spec MQ20 NMR equipment. The NMR device keeps switched on due to the time needed to warm up.

The sample tubes need to be placed dry and clean in the NMR as dirt can damage the measuring cell. Keep the white lid on the measuring opening after removal of the sample tube. The NMR needs a daily check every 24 hours. Make sure the sample is clean, homogeneous and without crystals. Otherwise heat up the sample. Fill 8 tubes with between 3.5 to 4 cm of sample and wipe off the tube on the outside with a tissue. Put all tubes in a waterbath of 0 °C during 60 min. Wipe off the tubes and place respectively: 2, 2, 1, 1, 1 en 1 tubes in the water baths of 10, 15, 18, 20, 25 and 30 °C during 60 min. Measure de NMR value of the 8-tubes. Dry each tube prior to placing it in the NMR measuring cell. Measure each sample in duplicate. For the samples up to 18 °C 2 samples are required for a duplicate measurement. The tubes with temperatures of 18°C and higher are measured in duplicate on the same sample. Note each sample in the NMR book in two decimals and calculate the average.

### Example 1

Dark chocolates were prepared on a 4 kg batch scale with the following ingredients: prerefined sugar, cocoa mass, cocoa butter, lecithin, and optionally one of the milk fat fractions. For each chocolate, two batches were sequentially produced to obtain 8 kg of final chocolate.

The composition of the reference chocolate is given in Table 2. This chocolate contains 33.5% fat:
- 33.1% cocoa butter (11.6% separately added and 21.5% as part of the cocoa mass);
- 0.4% lecithin.

**Table 2. Dark chocolate composition (reference).**

| **Ingredient** | **Weight (w/w) %** |
|---|---|
| Prerefined sugar | 48.0 |
| Cocoa mass | 40.0 |
| Cocoa butter | 11.6 |
| Lecithin | 0.4 |

Also dark chocolates with 3% milk fat fraction were produced. Compared to the composition of the reference dark chocolate, 3% of the added cocoa butter was substituted by an equivalent amount of milk fat fraction or AMF as reference. Anhydrous milk fat (AMF) is known to inhibit fat bloom. Table 3 gives the SFC of the milk fat fractions used. H1, H2 and H3 are stearin fractions and relative hard. H1, H2, and H3 are inside the invention. S1 is an olein fraction, relative soft and outside the invention.

**Table 3 SFC of milk fat fractions used**

| **SFC** | **H1** | **H2** | **S1** |
|---|---|---|---|
| 20 | 52 | 46 | 40 |
| 30 | 42.5 | 32 | 0.25 |
| 35 | 31.5 | 21 | 0.2 |
| 40 | 17.5 | 7 | 0.2 |

The dark chocolates with milk fat fractions or AMF contain 33.5% fat:
- 30.1% cocoa butter (8.6% separately added and 21.5% as part of the cocoa mass);
- 3.0% milk fat fraction (either H1, H2, AMF, or S1)

This resulted in a composition as given in Table 4

**Table 4. Dark chocolate composition (chocolate with milk fat fraction).**

| **Ingredient** | **Weight (w/w) %** |
|---|---|
| Prerefined sugar | 48.0 |
| Cocoa mass | 40.0 |
| Cocoa butter | 8.6 |
| Milk fat fraction | 3.0 |
| Lecithin | 0.4 |

A first step in the chocolate production is mixing of the ingredients sugar, cocoa mass and (optionally) the milk fat fraction. Taking into account the fat percentage of the cocoa mass (53.77 wt%), an amount of cocoa butter was also added to the mixture, so as to obtain a fat percentage of 27 wt%. Mixing of the ingredients is performed for 20 min at elevated temperature (45°C). A second step is refining of the mixture, so as to reduce the size of the dispersed particles (sugar, cocoa) to acceptable values with respect to the desired sensorial aspects (absence of sandiness). To this end, an three-roll refiner, operating at 35°C, was used.

A third step is conching, consisting of a dry conching and a wet conching phase. Total conching time is 390 min, of which 360 minutes dry conching and 30 minutes of wet conching.

Firstly, the refined mixture is dry conched for 360 min. Upon the start of the conching phase, a small amount of cocoa butter (1 wt%) is added to counteract product agglomeration and climbing up of the product to the top of the conching bowl. Wet conching starts with the addition of the remainder of the cocoa butter and the lecithin.

A next step in chocolate production is tempering. The different chocolate samples were tempered in a Selmi One automatic tempering unit (max. capacity 10 kg). After mixing the two batches of each chocolate, 8 kg was loaded in the tempering unit and the temperature of the molten chocolate was set at 45°C. The tempered chocolate left the device at a temperature of approximately 30.5°C. Finally the tempered chocolate was transferred to moulds (disks or tablets) and was allowed to cool further in temperature and relative humidity controlled Chocolate World cooling cabinets.

After 60 min cooling, all chocolate tablets and disks showed good contraction and released easily from the moulds. The demoulded chocolates were kept at 15°C for an additional 60 min and were then stored at 20°C.

A filling rich in hazelnuts was prepared. The recipe of the hazelnut filling can be found in Table 5. As the fat content of the hazelnut paste was 68%, the fat content of the filling was found to be 50.4%.

**Table 5. Hazelnut filling composition.**

| **Ingredient** | **Weight (w/w) %** |
|---|---|
| Prerefined sugar | 40.0 |
| Hazelnut past | 30.0 |
| Palm oil | 30.0 |

A first step in the filling production is mixing of the ingredients hazelnut paste and sugar. Taking into account the fat percentage of the hazelnut paste, a mixture with 29.1 wt% fat is obtained. Mixing of the ingredients is performed for 20 min at elevated temperature (45°C). A second step is refining of the mixture. To this end, a three-roll refiner, operating at 35°C, was used. In order to obtain the desired particle size reduction.

Finally, the palm oil was added to the refined mixture and the whole was blended for 20 min, operating at 45°C. In total 6 batches of each time 5 kg of hazelnut filling were produced for use in the later migration fat bloom test setup. Through Karl-Fisher analysis, the moisture content of these fillings was determined and in all cases, a sufficiently low moisture content (between 0.3 and 0.45%) was found.

To evaluate migration fat bloom two composed filling-chocolate systems have been produced,
- Moulded filled chocolates, pralines (as a close simulation of a real product, chocolate shell thickness 1-1.5 mm)
- Chocolate disks in close contact with the hazelnut filling (model system with a reproducible thickness of 3 mm)

The procedure to obtain the model system (chocolate disks in contact with the hazelnut filling) can be summarized as follows:
- Filling of the petri dishes with 18g of hazelnut filling (T = 32°C);
- Cooling for 45 min at 11°C, followed by 15 min at 20°C;
- For each petri dish, two chocolate disks are placed in close contact with the filling.

The filled chocolates are produced in the following way:
- Use tempered chocolate to mould the chocolate shell (1 - 1.5 mm);
- Shell cooling: 30 min at 11°C followed by 15 min at 20°C;
- Dosing of the filling at 26°C;
- Cooling: 30 min at 11°C followed by 15 min at 20° C;
- Bottom moulding of the chocolate;
- Cooling of the closed chocolate: 2 hours at 11°C.

The produced chocolate systems (filled chocolates, petri dishes with chocolate disks in contact with the hazelnut filling, chocolate disks alone) are put in Lovibond thermostatic cabinets to control the temperature during long-term storage. Two storage protocols are used:
- Storage at 20°C during 24 weeks
- Storage at 23°C during 12 weeks

At the end of this storage period, but also at intermediate times, the chocolates were allowed to crystallize and were inspected for further analyses. These comprise:
- HPLC analysis of the chocolate to assess the extent of oil migration from the filling into the chocolate. In the case of the filled chocolates, the product is sampled at the outside in a reproducible way. In the case of the chocolate disks, a microtome is used to section the chocolate disk in separate layers. For each chocolate sample, the triglyceride composition is determined. Hereby, triolein (OOO, hazelnut oil specific triglyceride) is used as a marker for oil migration;

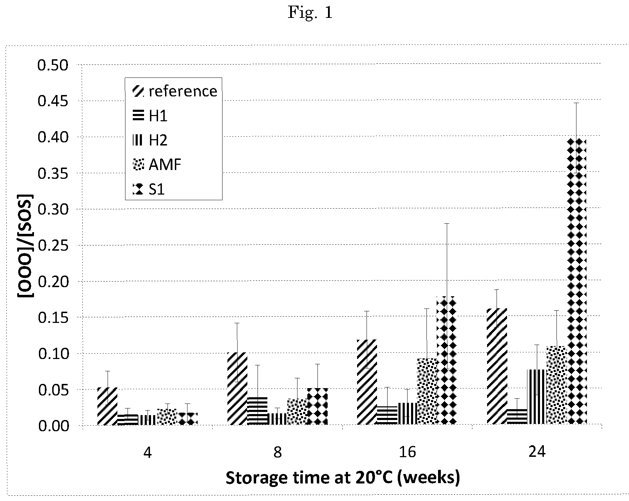

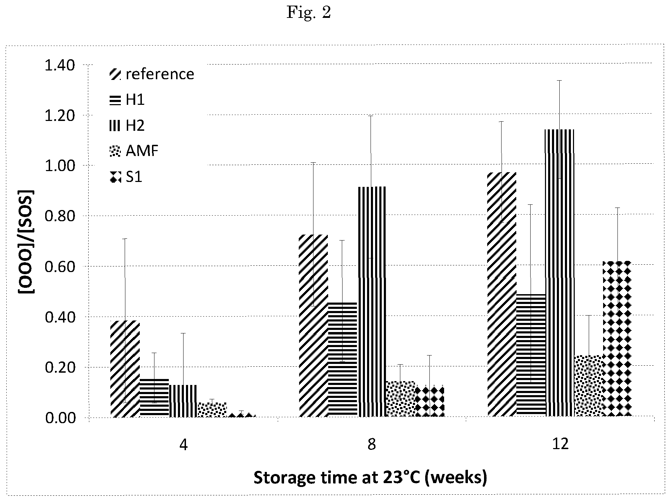

For pralines stored at either 20°C or 23°C, the extent of oil migration over time was assessed by HPLC analysis on the filled chocolates. Using the microtome, chocolate was sampled from the top part of each praline. Hereby, care was taken not to sample underlying filling. The triglyceride (TAG) composition of this chocolate sample was analysed through HPLC after fat extraction. From analysis of the filling, OOO and LOO were found to be specific TAGs for the filling, which were hardly observed in the fat fraction of the plain chocolate (that had never been in contact with filling). In fig. 1 and fig 2 the triglycerides OOO is indicated as w/w% of the total SOS triglyceride, indicative of cocoa butter. Sampling and analysis were performed on at least 5 pralines per sample.

The reference chocolate the level of OOO and thus the extent of oil migration from filling to chocolate, increases steadily with the number of weeks storage at 20°C. As can be seen in fig. 1 after 8 weeks at 20°C, lower amount of migrated oil were observed in all the chocolates with 3% milk fat fraction and the chocolate with AMF compared to the reference without milk fat. However as the storage time prolongs, differences begin to occur. At week 16 and especially week 24, the milk fat fraction of the present invention, H1, still shows little oil migration while the soft fraction and the reference chocolate without milk fat show more and more oil migration. Also H2, is better than the reference without milk fat and the chocolate with AMF.

Overall, it can be seen that at 23°C, compared to storage at 20°C, much higher levels of filling specific triglycerides were found in the chocolate shell. As a result of the storage at a higher temperature, the migration of filling specific triglycerides to the outer chocolate shell has (in most cases significantly) increased. As can be seen in Fig. 2 after 8 weeks storage at 23°C less oil migration is still measured for the chocolates with milk fat fraction H1, S1 and AMF compared to the reference. At longer storage time, 12 weeks the H2, AMF and S1 increased oil migration while for H1, oil migration remained the same and was still lower than the reference and the chocolate with the other milk fat fractions.

### Example 2:

Table 6 gives the SFC of the milk fat fractions used. H3 is stearin fraction.

**Table 6 SFC of milk fat fractions used**

| **SFC** | **AMF** | **H3** |
|---|---|---|
| 20 | 30 | 43 |
| 30 | 11 | 26 |
| 35 | 3 | 16 |
| 40 | 0 | 2.6 |

The dark chocolates with milk fat fractions or AMF contain 33.5% fat:
- 30.1% cocoa butter (8.6% separately added and 21.5% as part of the cocoa mass);
- 3.0% milk fat (AMF or H3)

This resulted in a composition as given in Table 7

**Table 7. Dark chocolate composition (chocolate with milk fat fraction).**

| **Ingredient** | **Weight (w/w) %** |
|---|---|
| Prerefined sugar | 48.0 |
| Cocoa mass | 40.0 |
| Cocoa butter | 8.6 |
| Milk fat fraction | 3.0 |
| Lecithin | 0.4 |

A filling rich in hazelnuts was prepared. The recipe of the hazelnut filling can be found in Table 8.

**Table 8. Hazelnut filling composition.**

| **Ingredient** | **Weight (w/w) %** |
|---|---|
| Prerefined sugar | 45 |
| Hazelnut past | 25 |
| Palm oil | 30 |

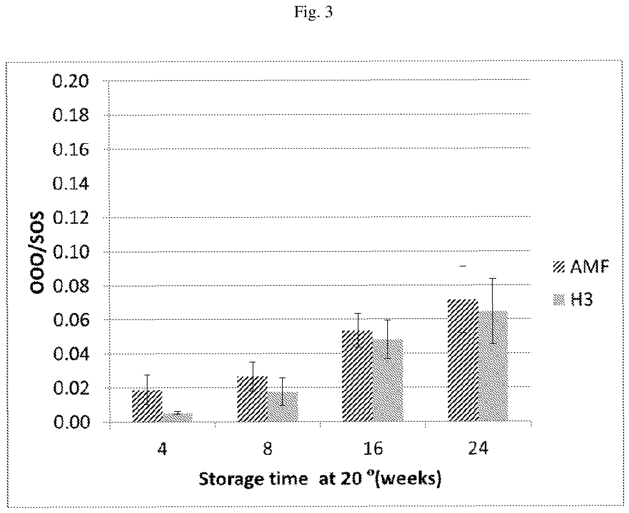

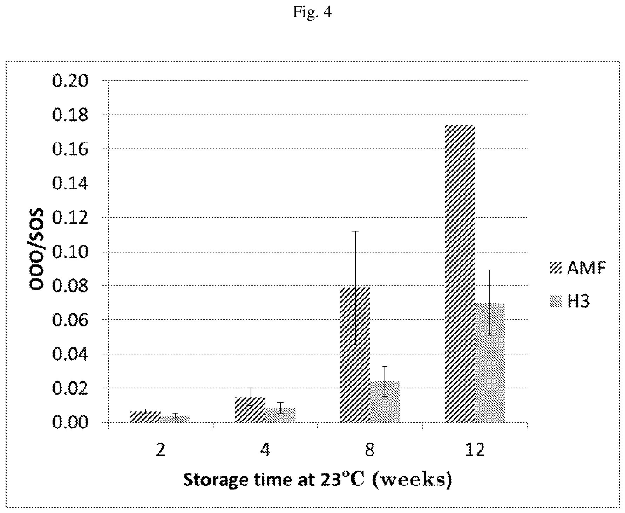

Figure 3 and 4 shows the results of chocolate with H3 at 20°C and 23°C respectively. At 20°C, chocolate with H3 has always less oil migration than chocolate with AMF. For H3, the storage at 23°C shows a much better resistance against oil migration than chocolate with AMF.

As can be seen from the experiments, milk fat fraction according to the invention prevents oil migration the longest and is at 20°C even better than AMF.

In another preferred embodiment the method of the present invention and embodiments thereof mixes a milk fat fraction wherein the milk fat fraction has a SFC25 of at least 43%, preferably at least 45%, more preferably at least 50%, more preferably at least 55%, and most preferably at least 57%.

In another preferred embodiment the method of the present invention and embodiments thereof mixes a milk fat fraction wherein the milk fat fraction has a SFC30 of at least 35%, preferably at least 37%, more preferably at least 40%, more preferably at least 45%, more preferably at least 50%, and most preferably at least 55%.

In another preferred embodiment the method of the present invention and embodiments thereof mixes a milk fat fraction wherein the milk fat fraction has a SFC35 of at least 24%, preferably at least 27%, more preferably at least 30%, more preferably at least 35%, more preferably at least 40%, more preferably at least 45%, and most preferably at least 48%.

In another preferred embodiment the method of the present invention and embodiments thereof mixes a milk fat fraction wherein the milk fat fraction has a SFC25 of from 43% to 57%, more preferably of from 45% to 55%, more preferably of from 47% to 53%, and most preferably of from 49% to 52%.

In another preferred embodiment the method of the present invention and embodiments thereof mixes a milk fat fraction wherein the milk fat fraction has a SFC30 of from 35% to 56%, preferably of from 38% to 53%, more preferably of from 40% to 51%, more preferably from 42% to 49%, and most preferably from 44% to 47%.

In another preferred embodiment the method of the present invention and embodiments thereof mixes a milk fat fraction wherein the milk fat fraction has a SFC35 of from 24% to 48%, preferably of from 27% to 45%, more preferably of from 30% to 42%, more preferably of from 32% to 39%, and most preferably of from 35% to 37.

## Claims

1. Praline or filled chocolate comprising a chocolate composition as coating, wherein the chocolate composition comprises a milk fat fraction wherein the milk fat fraction has a SFC25 of at least 36%, and/or a SFC30 of at least 25% and/or a SFC35 of at least 15%, preferably wherein the milk fat fraction has a
SFC25 of at least 41.5%, and/or a SFC30 of at least 32.5% and/or a SFC35 of at least 21.5%, more preferably wherein the milk fat fraction has a SFC25 of at least 30%, and/or a SFC30 of at least 20% and/or a SFC35 of at least 10%.

2. Praline or filled chocolate according to claim 1, wherein the milk fat fraction of the chocolate composition has a SFC25 of less than 60%, and/or a SFC30 of less than 58% and/or a SFC35 of less than 50%.

3. Praline or filled chocolate according to any of the previous claims wherein the milk fat fraction of the chocolate composition has a SFC25 of at least 43%, preferably at least 45%, more preferably at least 50%,
more preferably at least 55%, and most preferably at least 57%.

4. Praline or filled chocolate according to any of the previous claims wherein the milk fat fraction of the chocolate composition has a SFC30 of at least 35%, preferably at least 37%, more preferably at least 40%, more preferably at least 45%, more preferably at least 50%, and most preferably at least 55%.

5. Praline or filled chocolate according to any of the previous claims wherein the milk fat fraction of the chocolate composition has a SFC35 of at least 24%, preferably at least 27%, more preferably at least 30%, more preferably at least 35%, more preferably at least 40%, more preferably at least 45%, and most preferably at least 48%.

6. Praline or filled chocolate according to any of the previous claims wherein the milk fat fraction of the chocolate composition has a SFC40 of less than 30%, preferably less than 25%, preferably less than 20%, preferably less than 18%, preferably less than 15%.

7. Praline or filled chocolate according to any of the previous claims wherein the milk fat fraction of the chocolate composition has a SFC40 of at least 2%, preferably at least 6%, preferably at least 8%, more preferably at least 10%, more preferably at least 12%, more preferably at least 20%, more preferably at least 25%, more preferably at least 35%.

8. Praline or filled chocolate according to any of the previous claims wherein the milk fat fraction of the chocolate composition has a SFC45 of less than 15%, preferably less than 12%, preferably less than 10%, preferably less than 8%, preferably less than 6%, preferably less than 5%, preferably less than 4%, preferably less than 2%.

9. Praline or filled chocolate according to any of the previous claims wherein the milk fat fraction of the chocolate composition is obtained by means other than solvent fractionation.

10. Praline or filled chocolate according to any of the previous claims wherein the chocolate composition comprises up to 5 wt% of milk fat fractions, preferably 0.5-5wt% milk fat fraction, more preferably 1-4 wt% milk fat fraction, more preferably 1.5-3.5wt% milk fat fraction, most preferably 2-3 wt% milk fat fraction.

11. Method to produce a praline or filled chocolate according to any one of claims 1-10 wherein a filling is provided and a chocolate composition coating is provided, wherein the chocolate composition coating is prepared in a process comprising the steps of
a) preparing a chocolate mixture by mixing chocolate mass and sugar and/or other sweetening matter
b) optionally adding cocoa butter or other fat to make the fat percentage of the chocolate mixture from 5 to 50 wt% based on total weight of the chocolate composition
c) optionally adding other ingredients
d) refining the chocolate mixture
e) conching the chocolate mixture
f) tempering the chocolate mixture,
wherein the a milk fat fractions as defined in claims 1-10 may be added in step (a) and/or after refining step (d) or conching step (e).

## Patentansprüche

1. Praline oder gefüllte Schokolade, umfassend eine Schokoladezusammensetzung als Überzug, wobei die Schokoladezusammensetzung eine Milchfettfraktion umfasst, wobei die Milchfettfraktion einen SFC25-Wert von wenigstens 36 % und/oder einen SFC30-Wert von wenigstens 25 % und/oder einen SFC35-Wert von wenigstens 15 % aufweist, wobei die Milchfettfraktion vorzugsweise einen SFC25-Wert von wenigstens 41,5 % und/oder einen SFC30-Wert von wenigstens 32,5 % und/oder einen SFC35-Wert von wenigstens 21,5 % aufweist, wobei die Milchfettfraktion bevorzugter einen SFC25-Wert von wenigstens 30 % und/oder einen SFC30-Wert von wenigstens 20 % und/oder einen SFC35-Wert von wenigstens 10 % aufweist.

2. Praline oder gefüllte Schokolade gemäß Anspruch 1, wobei die Milchfettfraktion der Schokoladezusammensetzung einen SFC25-Wert von weniger als 60 % und/oder einen SFC30-Wert von weniger als 58 % und/oder einen SFC35-Wert von weniger als 50 % aufweist.

3. Praline oder gefüllte Schokolade gemäß einem der vorstehenden Ansprüche, wobei die Milchfettfraktion der Schokoladezusammensetzung einen SFC25-Wert von wenigstens 43 %, vorzugsweise wenigstens 45 %, bevorzugter wenigstens 50 %, bevorzugter wenigstens 55 % und höchst bevorzugt wenigstens 57 % aufweist.

4. Praline oder gefüllte Schokolade gemäß einem der vorstehenden Ansprüche, wobei die Milchfettfraktion der Schokoladezusammensetzung einen SFC30-Wert von wenigstens 35 %, vorzugsweise wenigstens 37 %, bevorzugter wenigstens 40 %, bevorzugter wenigstens 45 %, bevorzugter wenigstens 50 % und höchst bevorzugt wenigstens 55 % aufweist.

5. Praline oder gefüllte Schokolade gemäß einem der vorstehenden Ansprüche, wobei die Milchfettfraktion der Schokoladezusammensetzung einen SFC35-Wert von wenigstens 24 %, vorzugsweise wenigstens 27 %, bevorzugter wenigstens 30 %, bevorzugter wenigstens 35 %, bevorzugter wenigstens 40 %, bevorzugter wenigstens 45 % und höchst bevorzugt wenigstens 48 % aufweist.

6. Praline oder gefüllte Schokolade gemäß einem der vorstehenden Ansprüche, wobei die Milchfettfraktion der Schokoladezusammensetzung einen SFC40-Wert von weniger als 30 %, vorzugsweise weniger als 25 %, vorzugsweise weniger als 20 %, vorzugsweise weniger als 18 %, vorzugsweise weniger als 15 %, aufweist.

7. Praline oder gefüllte Schokolade gemäß einem der vorstehenden Ansprüche, wobei die Milchfettfraktion der Schokoladezusammensetzung einen SFC40-Wert von wenigstens 2 %, vorzugsweise wenigstens 6 %, vorzugsweise wenigstens 8 %, bevorzugter wenigstens 10 %, bevorzugter wenigstens 12 %, bevorzugter wenigstens 20 %, bevorzugter wenigstens 25 %, bevorzugter wenigstens 35 %, aufweist.

8. Praline oder gefüllte Schokolade gemäß einem der vorstehenden Ansprüche, wobei die Milchfettfraktion der Schokoladezusammensetzung einen SFC45-Wert von weniger als 15 %, vorzugsweise weniger als 12 %, vorzugsweise weniger als 10 %, vorzugsweise weniger als 8 %, vorzugsweise weniger als 6 %, vorzugsweise weniger als 5 %, vorzugsweise weniger als 4 %, vorzugsweise weniger als 2 %, aufweist.

9. Praline oder gefüllte Schokolade gemäß einem der vorstehenden Ansprüche, wobei die Milchfettfraktion der Schokoladezusammensetzung durch von Lösungsfraktionierung verschiedene Mittel erhalten ist.

10. Praline oder gefüllte Schokolade gemäß einem der vorstehenden Ansprüche, wobei die Schokoladezusammensetzung bis zu 5 Gew.-% Milchfettfraktion, vorzugsweise 0,5-5 Gew.-% Milchfettfraktion, bevorzugter 1-4 Gew.-% Milchfettfraktion, bevorzugter 1,5-3,5 Gew.-% Milchfettfraktion, höchst bevorzugt 2-3 Gew.-% Milchfettfraktion, umfasst.

11. Verfahren zur Herstellung einer Praline oder von gefüllter Schokolade gemäß einem der Ansprüche 1-10, wobei eine Füllung bereitgestellt wird und ein Überzug aus Schokoladezusammensetzung bereitgestellt wird, wobei der Überzug aus Schokoladezusammensetzung durch ein Verfahren hergestellt wird, das die Schritte umfasst:
a) Herstellen eines Schokoladegemischs durch Mischen von Schokolademasse und Zucker und/oder einem anderen süßenden Material,
b) gegebenenfalls Zugeben von Kakaobutter oder einem anderen Fett, um einen Fettgehalt des Schokoladegemischs auf 5 bis 50 Gew.-%, bezogen auf das Gesamtgewicht der Schokoladezusammensetzung, zu erhalten,
c) gegebenenfalls Zugeben anderer Inhaltsstoffe,
d) Raffinieren des Schokoladegemischs,
e) Conchieren des Schokoladegemischs,
f) Temperieren des Schokoladegemischs,
wobei die Milchfettfraktion gemäß Ansprüchen 1-10 bei Schritt (a) und/oder nach dem Raffinierschritt (d) oder dem Conchierschritt (e) zugegeben werden kann.

## Revendications

1. Chocolat praliné ou fourré comprenant une composition de chocolat en tant qu'enrobage, dans lequel la composition de chocolat comprend une fraction de matière grasse du lait, la fraction de matière grasse du lait ayant une SFC25 d'au moins 36 % et/ou une SFC30 d'au moins 25 % et/ou une SFC35 d'au moins 15 %, de préférence la fraction de matière grasse du lait ayant une SFC25 d'au moins 41,5 % et/ou une SFC30 d'au moins 32,5 % et/ou une SFC35 d'au moins 21,5 %, plus préférablement la fraction de matière grasse du lait ayant une SFC25 d'au moins 30 % et/ou une SFC30 d'au moins 20 % et/ou une SFC35 d'au moins 10 %.

2. Chocolat praliné ou fourré selon la revendication 1, dans lequel la fraction de matière grasse du lait de la composition de chocolat a une SFC25 inférieure à 60 % et/ou une SFC30 inférieure à 58 % et/ou une SFC35 inférieure à 50 %.

3. Chocolat praliné ou fourré selon l'une quelconque des revendications précédentes dans lequel la fraction de matière grasse du lait de la composition de chocolat a une SFC25 d'au moins 43 %, de préférence d'au moins 45 %, plus préférablement d'au moins 50 %, plus préférablement d'au moins 55 % et le plus préférablement d'au moins 57 %.

4. Chocolat praliné ou fourré selon l'une quelconque des revendications précédentes dans lequel la fraction de matière grasse du lait de la composition de chocolat a une SFC30 d'au moins 35 %, de préférence d'au moins 37 %, plus préférablement d'au moins 40 %, plus préférablement d'au moins 45 %, plus préférablement d'au moins 50 % et le plus préférablement d'au moins 55 %.

5. Chocolat praliné ou fourré selon l'une quelconque des revendications précédentes dans lequel la fraction de matière grasse du lait de la composition de chocolat a une SFC35 d'au moins 24 %, de préférence d'au moins 27 %, plus préférablement d'au moins 30 %, plus préférablement d'au moins 35 %, plus préférablement d'au moins 40 %, plus préférablement d'au moins 45 % et le plus préférablement d'au moins 48 %.

6. Chocolat praliné ou fourré selon l'une quelconque des revendications précédentes dans lequel la fraction de matière grasse du lait de la composition de chocolat a une SFC40 inférieure à 30 %, de préférence inférieure à 25 %, de préférence inférieure à 20 %, de préférence inférieure à 18 %, de préférence inférieure à 15 %.

7. Chocolat praliné ou fourré selon l'une quelconque des revendications précédentes dans lequel la fraction de matière grasse du lait de la composition de chocolat a une SFC40 d'au moins 2 %, de préférence d'au moins 6 %, de préférence d'au moins 8 %, plus préférablement d'au moins 10 %, plus préférablement d'au moins 12 %, plus préférablement d'au moins 20 %, plus préférablement d'au moins 25 %, plus préférablement d'au moins 35 %.

8. Chocolat praliné ou fourré selon l'une quelconque des revendications précédentes dans lequel la fraction de matière grasse du lait de la composition de chocolat a une SFC45 inférieure à 15 %, de préférence inférieure à 12 %, de préférence inférieure à 10 %, de préférence inférieure à 8 %, de préférence inférieure à 6 %, de préférence inférieure à 5 %, de préférence inférieure à 4 %, de préférence inférieure à 2 %.

9. Chocolat praliné ou fourré selon l'une quelconque des revendications précédentes dans lequel la fraction de matière grasse du lait de la composition de chocolat est obtenue par un moyen autre qu'un fractionnement par solvant.

10. Chocolat praliné ou fourré selon l'une quelconque des revendications précédentes dans lequel la composition de chocolat comprend jusqu'à 5 % en poids de fraction de matière grasse du lait, de préférence 0,5-5 % en poids de fraction de matière grasse du lait, plus préférablement 1-4 % en poids de fraction de matière grasse du lait, plus préférablement 1,5-3,5 % en poids de fraction de matière grasse du lait, le plus préférablement 2-3 % en poids de fraction de matière grasse du lait.

11. Procédé pour produire un chocolat praliné ou fourré selon l'une quelconque des revendications 1-10 dans lequel une garniture est utilisée et un enrobage de composition de chocolat est utilisé, l'enrobage de composition de chocolat étant préparé dans un processus comprenant les étapes de
a) préparation d'un mélange de chocolat par mélange d'une masse de chocolat et de sucre et/ou d'une autre substance édulcorante
b) éventuellement ajout de beurre de cacao ou d'une autre matière grasse pour amener le pourcentage de matière grasse du mélange de chocolat à 5 à 50 % en poids par rapport au poids total de la composition de chocolat
c) éventuellement ajout d'autres ingrédients
d) affinage du mélange de chocolat
e) conchage du mélange de chocolat
f) tempérage du mélange de chocolat,
les fractions de matière grasse du lait telles que définies dans les revendications 1-10 pouvant être ajoutée dans l'étape (a) et/ou après l'étape d'affinage (d) ou l'étape de conchage (e).
